# EUROPEAN PATENT APPLICATION

(11) **EP 4 366 258 A1**
(43) Date of publication of application: **08.05.2024**
(21) Application number: 22383063.9
(22) Date of filing: 04.11.2022
(51) Int. Cl.: H04L 41/042, H04L 41/142, H04L 41/16

(54) **COMMUNICATION NETWORK**

(71) Applicant: Nokia Technologies Oy, 02610 Espoo (FI); Universidad Carlos III de Madrid, 28903 Getafe (ES)
(72) Inventor: Bega, Dario, Munich (DE); Mannweiler, Christian, Munich (DE); Gramaglia, Marco, Madrid (ES)
(74) Representative: Balder IP Law, S.L.

(57) **Abstract**

Apparatuses and methods for use by analytics service producers, consumers, storage entities and network exposure entities of a communication network. The method comprises receiving a training request issued by an analytics service consumer of the communication network, the training request comprising an indication of a selected model of a plurality of models, each model of the plurality of models configured to produce analytics for an analytics service; and causing training of the selected model based at least on values of configurable training parameters associated with the selected model to optimize an application metric of the analytics service consumer.

## Description

### TECHNICAL FIELD

At least some example embodiments of the subject matter described herein relate to a communication network, in particular to analytics services generated by network entities of a communication network.

### BACKGROUND

Artificial Intelligence (AI) and Machine Learning (ML) techniques are being increasingly employed in communication networks comprising a 5G system (5GS). NWDAF (cf. [A]) in 5G core network (5GC) and MDAS (cf. [B]) for OAM system are two network entities in the 5GS that bring intelligence and generate analytics by processing management data and network data, and rely on AI and ML techniques to generate analytics. NWDAF provides generated analytics to one or more network functions (NFs) of a 5GC (5GC NFs). Similarly, the MDAS provides generated analytics to one or more other entities of an OAM system. The generated analytics may be either statistical information (e.g., statistics) of past events or predictive information (e.g., predictions).

KI #1 in [C] proposes to study whether a split of functionalities of a NWDAF ("NWDAF functional split") is required and eventually how to split functionalities of a NWDAF ("NWDSF functionalities"). Solutions to KI #1 recognize the need for a split of functionalities of a NWDAF such as for example separating functionalities of data collection and AI/ML model training (i.e., training of an AI/ML model configured to generate analytics) from the functionality of generating analytics using an AI/ML model at inference. The functionalizes of data collection and AI/ML model training could be collocated in the same NWDAF or could be provided by an external function (i.e., a NF that is not part of a 5GC of a (mobile) communication network), as described in Solution #5 in [C]. Furthermore, in Solution #56 described in [C], a NWDAF registers its profile to the NRF and the profile of the NWDAF includes a list of trained AI/ML models which can be shared with other NWDAF instances.

KI #7 in [C] proposes to study new input data as application detection feature to improve analytics (e.g., statistics and predictions) provided by NWDAF and described in [A].

In general, a process performed by a NWDAF or a MDAS to produce or generate analytics comprises the following:
1. Request to generate analytics
2. Data collection and preprocessing
3. AI/ML model training and validation
4. Analysis of collected data by an analysis function

AI/ML models can be trained using supervised learning, unsupervised learning or reinforcement learning. When an AI/ML model is trained using supervised learning, the AI/ML model is trained utilizing a training dataset comprising samples that are input-target examples. Each input-target example comprises input data and a target output (otherwise referred to as a ground truth output). When an AI/ML model is trained using unsupervised learning, the training dataset comprises samples where each sample comprises only input data because a target output for each sample input is not available. When training an AI/ML model using reinforcement learning, the AI/ML model is trained by having an intelligent agent implementing the AI/ML model interact with an environment that provides feedback to the intelligent agent for each action taken by the intelligent agent in form of rewards.

### LIST OF ABBREVIATIONS

- 3GPP: Third Generation Partnership Project
- 5G: Fifth Generation
- 5GC: 5G Core
- 5GS: 5G System
- AF: Application Function
- AI: Artificial Intelligence
- AnLF: Analytics Logical Function
- ID: Identifier
- KI: Key Issue
- KPI: Key Performance Indicator
- OAM: Operations, Administration and Maintenance
- O-RAN: Open Radio Access Network
- MDAS: Management Data Analytics Services
- ML: Machine Learning
- MnS: Management Services
- MT: Model Training
- MTLF: MT Logical Function
- NEF: Network Exposure Function
- NF: Network Function
- NRF: Network Repository Function
- NWDAF: Network Data Analytics Function
- RAN: Radio Access Network
- RIC: RAN Intelligent Controller
- TR: Technical Report
- TS: Technical Specification
- UE: User Equipment

### LIST OF REFERENCES

[A] 3GPP TS 23.288, version 17.5.0
[B] 3GPP TR 28.809, version 17.0.0
[C] 3GPP TR 23.700-91, version 17.0.0
[D] 3GPP TR 23.700-80, version 1.0.0
[E] 3GPP TR 23.700-81, version 1.0.0
[F] 3GPP TS 23.501, version 17.6.0
[G] 3GPP TS 23.502, version 17.6.0
[H] 3GPP TS 28.104, version 17.0.1
[I] 3GPP TS 28.105, version 17.0.0
   [1] Bega D. et al. "DeepCog: Cognitive network management in sliced 5G networks with deep learning", IEEE INFOCOM 2019.
   [2] Huang, Chen, et al. "Addressing the loss-metric mismatch with adaptive loss alignment", International Conference on Machine Learning 2019.

### SUMMARY

At least some example embodiments enable an Analytics Service Consumer to provide configurable training parameters associated with an AI/ML model to an Analytics Service Producer to ensure that analytics produced or generated and provided by the Analytics Service Producer optimizes an application metric of the Analytics Service Consumer ("Analytics Service Consumer's application metric").

According to at least some example embodiments, this is achieved by the methods, apparatuses and non-transitory computer-readable storage media as specified by the appended claims.

According to at least some example embodiments, information about the analytics produced or generated by an Analytics Service Producer is provided by the Analytics Service Consumer to the Analytics Service Producer that does not disclose an Analytics Service Consumer's application metric, which may not be appropriate from the Analytics Service Producer's perspective, but only conveys needed information to appropriately configure the training of an AI/ML model producing or generating the analytics, e.g., statistics or predictions.

According to at least some example embodiments, the training of the ML model, which is performed by the Analytics Service Producer or another network entity accessible by the Analytics Serve Producer, is enhanced by introducing new signalling sent by the Analytics Service Consumer to the Analytics Serve Producer that allows the Analytics Service Consumer to tune configurable training parameters associated with the AI/ML model. According to at least some example embodiments, the Analytics Service Producer is an NWDAF or an AnLF in case of NWDAF functional split, and the Analytics Service Consumer is an AF.

Furthermore, in the example embodiments the Analytics Service Producer is an NWDAF, according to at least some example embodiments, the NWDAF profile of the NWDAF stored at NRF is enhanced to include not only the information about the list of the AI/ML models available to the NWDAF, but also to include configurable training parameters associated with each of the available AI/ML models that can be configured by an Analytics Service Consumer.

According to at least some example embodiments, at least some of the following features are introduced:
1. New Analytics Service Producer service input parameters, including configurable training parameters associated with an AI/ML model, which are accessible and configurable by an Analytics Service Consumer.
2. Allowing the Analytics Service Consumer to configure, update or modify the configurable training parameters associated with an AI/ML model during a training phase, i.e., when the Analytics Service Producer or another network entity accessible by the Analytics Service Producer is training the AI/ML model, thereby ensuring that the Analytics Service Consumer's application metric is optimized.
3. Enhancement of the NWDAF's profile stored in the NRF to include the configurable training parameters associated with an AI/ML model that can be configured, updated or modified by any Analytics Service Consumer.
4. Procedure for training an AI/ML model ("AI/ML model training") that takes into account the configurable training parameters associated with the AI/ML model that can be configured, updated or modified and updated by the Analytics Service Consumer.

At least some example embodiments impact the following references:
[A]: data collection and production or generation of analytics by NWDAF;
[D]: solution to KI #3 "5GC Information Exposure to authorized 3rd party for Application Layer AI/ML Operation" and KI #4 "Enhancing External Parameter Provisioning";
[E]: solution to KI #1 "How to improve correctness of NWDAF analytics";
[F] and [G]: NWDAF discovery, NEF and NWDAF profiles and services provided;
[H] and [I]: extending the information exchanged between MLMT MnS producer and MLMT MnS consumer when the MLMT MnS consumer requests an MLMT MnS producer, that performs AI/ML model training, to train an AI/ML model.

Furthermore, according to at least some example embodiments of the subject matter disclosed herein the Analytics Service Consumer is an rApp (xApp, respectively) and the Analytics Service Producer is a non-real-time RIC (near-real-time RIC, respectively) of a RAN having an O-RAN architecture.

According to at least some example embodiments of the subject matter disclosed herein, information about an application metric (or an implicit representation of it) can efficiently be used by a network function of a core network or OAM system of a (mobile) communication system to control an analytics service provided by an NF service producer of an analytics service (referred to herein as Analytics Service Producer) in the (mobile) communication network in order to ensure the optimization of the application metric.

In the following, example embodiments will be described with reference to the accompanying drawings.

### BRIEF DESCRIPTION OF THE DRAWINGS

Fig. 1 shows flowcharts illustrating processes performed by an Analytics Service Producer and an Analytics Service Consumer for optimizing an application metric of the Analytics Service Consumer according to at least some example embodiments.
Fig. 2 shows flowcharts illustrating processes performed by a storage entity and a network exposure entity for optimizing an application metric for of the Analytics Service Consumer according to at least some example embodiments.
Figs. 3A and 3B show signaling diagrams illustrating signaling between an AF and a NWDAF for analytics generation according to a first example embodiment.
Fig. 4 shows a schematic diagram illustrating an MLMT MnS consumer and an MLMT MnS producer according to a second example embodiment.
Fig. 5 shows a signaling diagram illustrating signaling between the MLMT MnS consumer and the MLMT MnS producer for analytics generation according to the second example embodiment.
Fig. 6 shows a schematic block diagram illustrating apparatuses in which at least some example embodiments are implementable.

### DESCRIPTION OF THE EMBODIMENTS

When AI/ML models are trained using supervised learning as mentioned above, an AI/ML model is trained employing a training dataset where each sample in the training dataset comprises an input-target pair comprising input data and a target output. During training, generally referred to as a training phase, for each input-target pair:
i) the model generates an output based on the input data, and
ii) an error between the generated output and the target output is computed using a predefined static loss function.

Finally, the model parameters (i.e., the parameters of the AI/ML model) are updated using an optimization algorithm whose goal is to minimize the computed error.

The static loss function mentioned above is used during the training of an AI/ML model to change the parameters of the model in order to optimize the static loss function. The static loss function does not change during training of the AI/ML model (i.e., a training phase of the AI/ML model). An example of a static loss function is a Mean Absolute Error loss function. When an Analytics Service Producer in a 5GC or an OAM system of a (mobile) communication network trains an AI/ML model which produce analytics, the analytics may be a metric associated with the (mobile) communication network comprising the 5GC or the OAM system. In this example, optimizing the static loss function results in optimizing the metric associated with the (mobile) communication network (generally referred to as a network metric). In contrast, an Analytics Service Consumer, e.g., AF, is interested in optimizing its own metric that may be not related to the network metric.

However, the overall performance of a (mobile) communication network that includes Analytics Service Producers which employs an AI/ML model is often not measured in terms of the static loss (which merely compares samples), but accounts for application metrics that are meaningful especially from a perspective of an analytics service of a NF consumer (referred to herein as Analytics Service Consumer). For example, if an AI/ML model performs a classification task, binary cross entropy is used as network metric, the overall performance of the (mobile) communication network is evaluated based on the accuracy of the classification task as application metric. Hence, while the AI/ML model uses a network metric to change the model parameters of the AI/ML model during training to optimize the network metric, the overall system that employs the AI/ML model (such as a 5G System) most likely needs to optimize an overarching application metric. This can affect the accuracy and correctness of the analytics generated by the AI/ML model. This problem is exacerbated in a 5G system in which the application metric is often managed by a provider of analytics services, while the analytics that are directly related with the network metric are computed by the network operator.

In a 5GC, a NWDAF, and in particular an AnLF of a NWDAF, is responsible for producing analytics. The NWDAF (or the AnLF of the NWDAF) may employ AI/ML models to produce such analytics. 5GC NFs can subscribe to NWDAF (or the AnLF of the NWDAF) to be notified about analytics from the NWDAF (or the AnLF of the NWDAF) or can request analytics from the NWDAF AnLF. Thus, in this example embodiment, the NWDAF AnLF is an Analytics Service Producer.

When a NF of the 5GC subscribes to an analytics service of the NWDAF AnLF to receive analytics from the NWDAF AnLF or requests analytics from the NWDAF AnLF, the NWDAF AnLF collects the required data from other NFs of the 5GC as input data for the AI/ML model, requests an AI/ML model from the NWDAF MTLF that is responsible to train the AI/ML model, and inputs the collected input data into the AI/ML model to produce the required analytics (e.g., predictions). To improve the accuracy of the analytics (e.g., predictions) produced or generated by the AI/ML model, the NWDAF AnLF could also collect Application's Traffic KPIs Measurements.

In some example embodiments, an Application Function (AF), which is an Analytics Service Consumer of an analytics service of NWADF, could receive analytics from the NWDAF AnLF directly or through the NEF in order to optimize its application metric. With this goal, the AF would like to receive from NWDAF AnLF accurate analytics without disclosing information about its application metric to the Analytics Service Producer (e.g., the NWDAF AnLF).

Without information about the application metric, the NWDAF MTLF trains an AI/ML model until a static loss function is minimized, i.e., the NWDAF MTLF cannot ensure that the AI/ML model is correctly trained to optimize the application metric of the Analytics Service Consumer. Similarly, without indication of the static loss function (i.e., the network metric), NWDAF MTLF is incapable of training the AI/ML model to minimize the error computed during each training iteration of the training of the AI/ML model. This lack of information can affect the accuracy of the analytics produced or generated by the NWDAF AnLF.

In the following, at least some example embodiments of the subject matter described herein will be described with reference to the accompanying drawings.

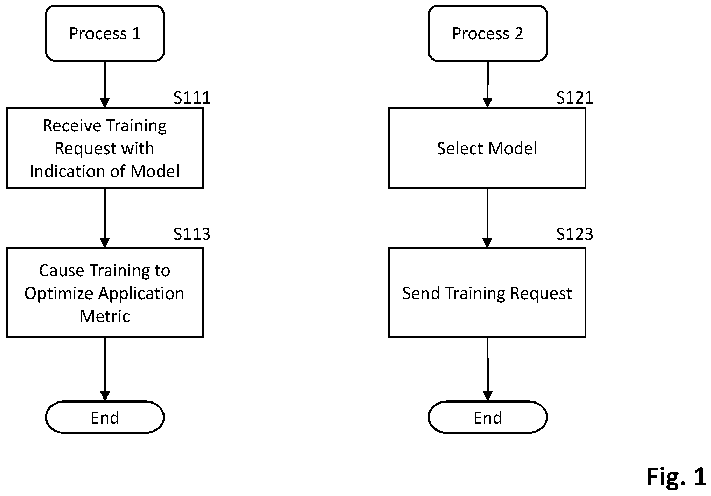

Fig. 1 shows flowcharts illustrating a process 1 and a process 2, for optimizing an application metric of an Analytics Service Consumer according to at least some example embodiments.

The application metric mentioned above refers to the metric that an external entity (external with respect to the (mobile) communication network) would like to be optimized by an operator of the mobile communication network ("the mobile network operator"). So, in general the application metric is the Analytics Service Consumer's metric, while the network metric is the mobile network's operator metric. For example, when managing resources in the (mobile) communication network in order to accommodate traffic for different services, the network metric may be a mean absolute error function to reduce the error in the forecast of the traffic load for each service while the application metric may be related to a cost function of not admitting traffic of a given service.

According to at least some example embodiments, process 1 is executed by an Analytics Service Producer of a (mobile) communication network. According to at least some example embodiments, the Analytics Service Producer is hardware (e.g., an apparatus) that includes software, or simply software that is executable by at least one processor of one or more computers, e.g., a distributed computing system or a cloud computing system. According to at least some example embodiments, the Analytics Service Producer is configured to provide an analytics service. According to at least some example embodiments, the Analytics Service Producer is configured to provide access to the analytics service of a network entity or network function of the (mobile) communication network.

Further, according to at least some example embodiments, process 2 is executed by an Analytics Service Consumer of the (mobile) communication network. According to at least some example embodiments, the Analytics Service Consumer is hardware (e.g., an apparatus) that includes software, or simply software that is executable by at least one processor of one or more computers, e.g., a distributed computing system or a cloud computing system.

Referring to process 1 shown in Fig. 1, at step S111, a training request generated and sent by an Analytics Service Consumer of the communication network is received by the Analytics Service Producer. The training request comprises an indication of a selected model (e.g., AI/ML model) of a plurality of models (e.g., AI/ML models), each model of the plurality of models configured to produce analytics for an analytics service. Then, process 1 advances to step S113.

According to at least some embodiments, the indication is an identifier of the selected model ("model ID") identifier of the selected model ("model ID").

At step S113, training of the selected model based at least on values of configurable training parameters associated with the selected model to optimize an application metric of the analytics service consumer entity is caused. Then, process 1 ends.

According to at least some example embodiments, the training request further comprises initial values for one or more of the configurable training parameters associated with the selected model, and the Analytics Service Producer causes setting the values of the one or more configurable training parameters to the initial values. Alternatively or in addition, the Analytics Service Producer causes setting of default values for one or more of the configurable training parameters associated with the selected model.

According to at least some example embodiments, the Analytics Service Producer provides the analytics service consumer with information about the plurality of models and respective configurable training parameters associated with the plurality of models.

According to at least some example embodiments, during training of the selected model, the Analytics Service Producer sends status information for the selected model and temporary analytics produced by the selected model towards the Analytics Service Consumer.

According to at least some example embodiments, the Analytics Service Producer receives updated values for the configurable training parameters from the Analytics Service Consumer, wherein the updated values have been set to optimize the application metric of the Analytics Service Consumer, and causes continuation of the training of the selected model based on the updated values for the configurable training parameters.

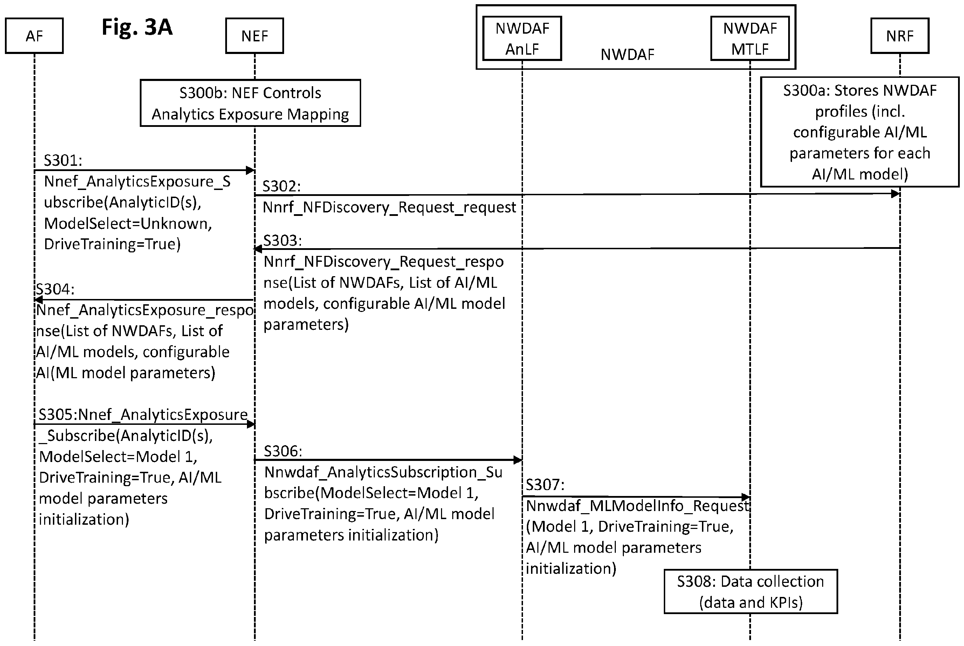

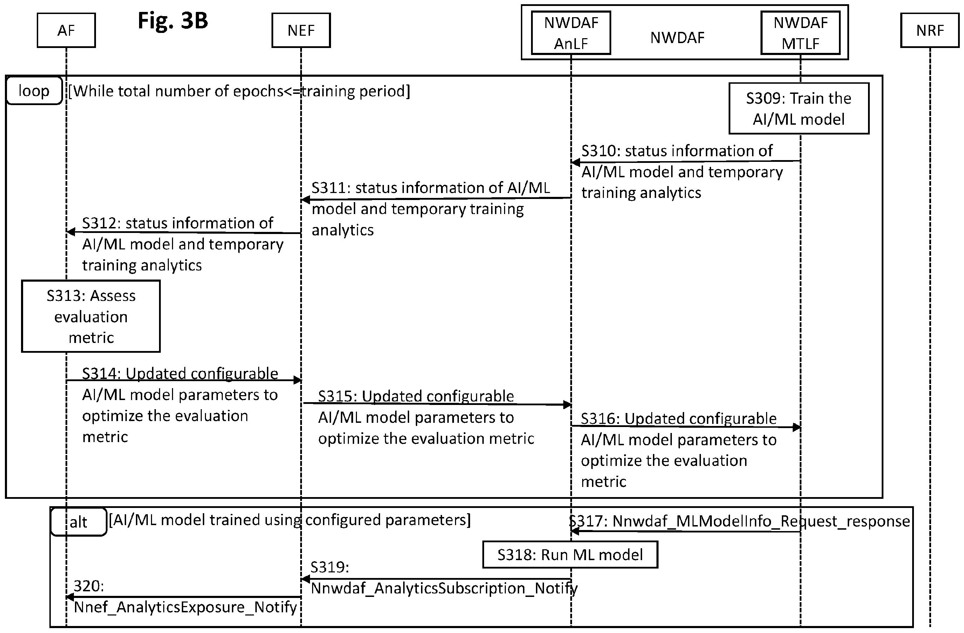

Step S111 corresponds to step S306 of Fig. 3A, and step S113 corresponds to step S309 of Fig. 3B, Figs. 3A and 3B illustrating a first example embodiment which will be described later on.

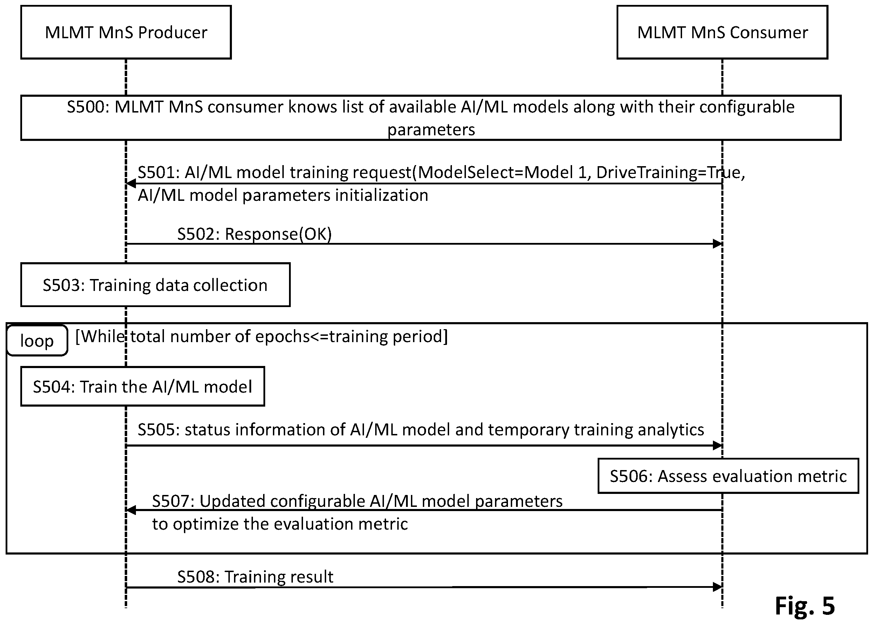

Further, step S111 corresponds to step S501 of Fig. 5, and step S113 corresponds to step S504 of Fig. 5 illustrating a second example embodiment which will be described later on.

Referring to process 2, at step S121, the Analytics Service consumer selects a model (e.g., an AI/ML model) from a plurality of models (e.g., AI/ML models) for an analytics service of an Analytics Service Producer, where each model of the plurality of models is configured to produce or generate analytics for the analytics service. Then, process 2 advances to step S123.

At step S123, the Analytics Service Consumer sends a training request comprising an indication of the model, for training the model based at least on values of configurable parameters associated with the model towards an Analytics Service Producer to train the model to optimize an application metric of the Analytics Service Consumer. Then process 2 ends.

According to at least some embodiments, the indication of the model comprises the identifier of the selected model ("model ID").

According to at least some example embodiments, the Analytics Service Consumer sets values for one or more of the configurable training parameters, and includes the values in the training request.

According to at least some example embodiments, the Analytics Service Consumer selects the model from the plurality of models based on information provided by the analytics service producer.

Alternatively or in addition, the Analytics Service Consumer selects the model and the one or more of the configurable training parameters from the plurality of models and configurable training parameters associated with the respective models based on information provided by the Analytics service Producer.

Alternatively or in addition, the Analytics Service Consumer selects the model from the plurality of models based on information which is provided by a network exposure entity of the communication network based on a profile of the Analytics Service Producer stored in a storage entity of the communication network.

Alternatively or in addition, the Analytics Service Consumer selects the model and the one or more of the configurable training parameters from the plurality of models and configurable training parameters associated with the respective models based on information which is provided by a network exposure entity of the communication network based on a profile of the Analytics Service Producer stored in a storage entity of the communication network.

According to at least some example embodiments, the Analytics Service Consumer receives status information of the model being trained and temporary analytics produced by the model being trained, assesses the application metric and determines new values for the configurable training parameters based on the assessing for optimizing the application metric of the Analytics Service Consumer, and updates the values of the configurable training parameters to the new values and sends the updated values towards the Analytics Service Producer.

Steps S121 and S123 correspond to step S305 of Fig. 3A illustrating the first example embodiment to be described later on.

Further, steps S121 and S123 correspond to step S501 of Fig. 5 illustrating the second example embodiment to be described later on.

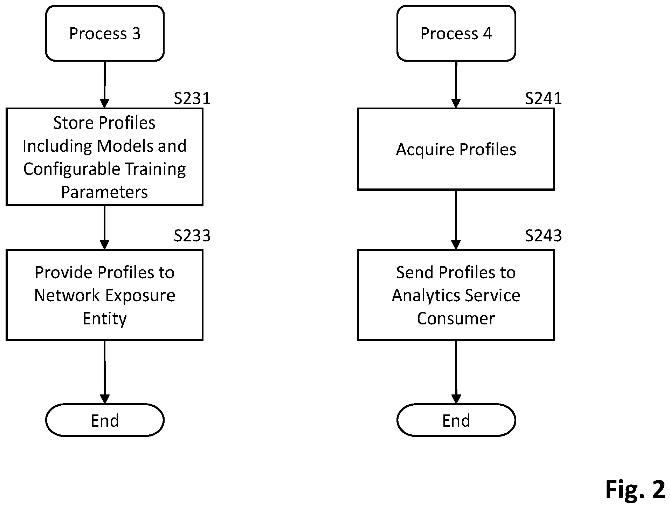

Fig. 2 shows flowcharts illustrating a process 3 and a process 4, for optimizing an application metric of an Analytics Service Consumer according to at least some example embodiments.

According to at least some example embodiments, process 3 is executed by a storage entity of a 5GC or an OAM system of the (mobile) communication network. According to at least some example embodiments, the storage entity or the OAM system is hardware that includes software, or simply software that comprises instructions that are executable by at least one processor of one or more computers, e.g., a distributed computing system or a cloud computing system.

Further, according to at least some example embodiments, process 4 is executed by a network exposure entity (otherwise referred to as a network exposure function) of a core network the (mobile) communication network. According to at least some example embodiments, the network exposure entity is hardware that includes software, or simply software that includes instructions executable by at least one processor of one or more computers, e.g., a distributed computing system or a cloud computing system. According to at least some example embodiments, the network exposure entity is software that includes instructions that are executable by at least one processor of a single computer, a distributed computing system or a cloud computing system.

Referring to process 3, at step S231, the storage entity (e.g., NRF)) stores profiles of Analytics Service Producers of the (mobile) communication network. Each of the profiles may comprise a plurality of models (e.g., AI/ML models) configured to produce analytics for analytics services, and configurable training parameters associated with each of the plurality of models (e.g., AI/ML models) to be configured or set by Analytics Service Consumers to optimize application metrics of the Analytics Service Consumers. Then, process 3 advances to step S233.

At step S233, the profiles of Analytics Service Producers are provided to a network exposure entity (otherwise referred to as a network exposure function) of a core network (e.g., a 5GC) of the (mobile) communication network. Then, process 3 ends.

Step S231 corresponds to step S300a of Fig. 3A, and step S233 corresponds to step S303 of Fig. 3A illustrating the first example embodiment to be described later on.

Referring to process 4, at step S241, based on requested one or more analytics services, the network exposure entity obtains or retrieves profiles of Analytics Service Producers of the communication network from the storage entity. Each profile of an Analytics Service Producer comprise a plurality of models (e.g., AI/ML models) configured to produce analytics for the requested analytics service, and configurable training parameters associated with each model (e.g., AI/ML model) of the plurality of models to be configured or set by an Analytics Service Consumer to optimize an application metric of the Analytics Service Consumer. Then, process 4 advances to step S243.

At step S243, the network exposure entity sends the Analytics Service Producer profiles to the Analytics Service Consumer. Then, process 4 ends.

Step S241 corresponds to step S302 of Fig. 3A, and step S243 corresponds to step S304 of Fig. 3A illustrating the first example embodiment to be described later on.

The term "configurable training parameters" as used in this application are parameters related to the training of a model which produces or generates analytics (e.g., a neural network model that is configured to produce or generate analytics) that can be changed or modified during its training phase (i.e., during training of the model). The configurable training parameters can be the parameters of a parameterized loss function. The configurable training parameters can include a filter offset in a deformable convolutional layer of the model when the model is a convolutional neural network model and can include a learning rate employed by an optimizer used to train the model.

Figs. 3A and 3B show signaling diagrams illustrating signaling according to the first example embodiment.

In Figs. 3A and 3B, an NWDAF (AnLF and MTLF) is an Analytics Service Producer, and an AF is an Analytics Service Consumer.

It is noted that in some example embodiments, an rApp (xApp, respectively) of a RAN having an O-RAN architecture is an Analytics Service Consumer, and a non-real-time RIN (near-real-time RIC, respectively) of the RAN having an O-RAN architecture is an Analytics Service Producer, with similar signalling as that shown in Fig. 5.

The implementation of the first example embodiment requires the following:
1. New NWDAF service input parameters (i.e., input parameters of the service exposed by the NWDAF) including a first new service input parameter referred to as DriveTraining (which is a boolean parameter indicating whether the Analytic Service Consumer wishes to configure the configurable training parameters associated an AI/ML model), a second new service input parameter referred to as ModelSelect (which is a string parameter identifying which AI/ML model the Analytic Service Consumer wishes to be trained) and further new service input parameters referred to as configurable training parameters associated with the AI/ML model. A Nnef_AnalyticsExposure_Subcribe service operation and Nnwdaf_AnalyticsSubscription_Subscribe service operation allow an Analytics Service Consumer (e.g., an AF) to access configurable training parameters associated with an AI/ML model to configure, update or modify the configurable training parameters associated with the AI/ML model, drive the training of the AI/ML model thereby ensuring that an application metric of the AF is optimized during training of the AI/ML model and to select the required AI/ML model.
2. Introduction of novel NEF and NWDAF (AnLF and MTLF) functionality to allow an AF to configure, update or modify configurable training parameters associated with an AI/ML model during training of the AI/ML model to enforce the optimization of an application metric ("application metric's optimization") of the AF (i.e., an Analytics Service Consumer). Leveraging on the analytics services described herein, the NWDAF and the NEF are able to expose the configurable training parameters associated with an AI/ML model for configuration, updating, or modification. In this way, the AF, which may be either a trusted AF or an untrusted AF, can drive the training of the AI/ML model (to be described in more detail later on) without disclosing information regarding the AF's application metric(s). Configurable training parameters associated with an AI/ML model can be changed (e.g., configured, updated or modified) during training of the AI/ML model. In some example embodiments, an AI/ML model may employ a parametrized loss function as a network metric, and the parameters of the parametrized loss function may be the configurable training parameters associated with the AI/ML model, and the NWDAF may expose the parameters of the parametrized loss function to be configured, updated, or modified by the AF. Other possible examples of configurable training parameters associated with an AI/ML model are represented by the filters offset in a deformable convolutional layer of the AI/ML model or the learning rate employed by the optimizer, as mentioned above.
3. Enhancement of NWDAF's (ANLF and MTLF) profile stored in the NRF of a core network, such as a 5GC, of a (mobile) communication system to include also the configurable training parameters associated with an AI/ML model that can be configured, modified, or updated by an Analytics Service Consumer during the training of the AI/ML model, and the list of available AI/ML models.
4. Introduction of a method for training an AI/ML model which allows the Analytics Service Consumer to configure, update or modify the configurable training parameters associated with an AI/ML model.

Referring to Fig. 3A, according to S300a, the NRF stores profiles of NWDAFs (NWDAF profiles). Each NWDAF profile stored in the NRF includes available AI/ML models (e.g., list of available AI/ML models) and configurable training parameters associated with each AI/ML model. As mentioned above, configurable training parameters associated with an AI/ML model are the parameters that can be configured externally by the analytics service consumer entity. For example, an AI/ML model may employ a parametrized loss function as weighted sum of multiple loss functions. In this example, the "configurable training parameters associated with the AI/ML model" are the parameters of the parameterized loss function that can be changed by an Analytics Service Consumer during AI/ML model training. The parameterized loss function is referred to herein as "network metric" because it can be measured by a network operator of a (mobile) communication system. The "configurable training parameters associated with an AI/ML model" can be configured, updated, or modified by the Analytics Service Consumer (e.g., the parameters of a parameterized loss function can be configured, updated, or modified by the Analytics Service Consumer), which impacts the way the training affects the updates to the AI/ML model parameters (e.g., weights and biases) of the AI/ML model being trained, leading to optimization of an application metric of the Analytics Service Consumer instead of the network metric.

According to S300b, the NEF exposes to external entities the services provided by 5GC NFs and their IDs.

At S301, the AF subscribes (or cancels a subscription) to an analytics service provided by the NWDAF by invoking a
Nnef_AnalyticsExposure_Subscribe service operation (or Nnef_AnalyticsExposure_Unsubscribe service operation when the AF cancels a subscription) specifying, among others, required NWDAF's service input parameters (which are described in clause 5.2.6.16 in [G]), Analytic ID(s), setting the NWDAF's second new service input parameter referred to ModelSelect to "Unknown" and the NWDAF's first new service input parameter referred to as DriveTraining to "True". The Nnef_AnalyticsExposure_Subscribe service operation is used by an AF to send a subscription message to subscribe to analytics services of NWDAF.

Then, the NEF forwards the subscription message to the NWDAF, as illustrated by S305, S306 to be described later on. However, because the NWDAF's second new input parameter referred to as ModelSelect is set to "Unknown" in S301, the NEF starts the discovery of NWDAF AnLF instance(s) along with the list of AI/ML models available (the list of available AI/ML models included in the profile of the NWDAF ("NWDAF MTLF profile", for example). The NWDAF's first new service input parameter referred to DriveTraining also allows the AF to configure, update or modify the configurable training parameters associated with the AI/ML model.

At S302, the NEF utilizes the NRF to discover NWDAF AnLF instance(s) based on the Analytics ID(s) specified by the AF. In particular, the NEF sends a request (Nnrf_NFDiscovery_Request_request) to NRF for the NWDAF AnLF instance(s) that provide the requested Analytics ID. The request (Nnrf_NFDiscovery_Request_request) sent to the NEF includes filters specified in the request (Nnef_AnalyticsExposure_Subscribe) sent by the AF. The NWDAF AnLF instance(s) that match the filters in the request (Nnrf_NFDiscovery_Request_request sent by the NEF are returned (i.e., provided) to the NRF.

At step S303, the NRF responds to the NEF with the list of available NWDAF AnLF instances along with the list of AI/ML models available and the configurable training parameters associated with the AI/ML model, using Nnrf_NFDiscovery_Request_response. For example, the configurable training parameters may be the parameters of a network metric used for training an AI/ML model. In some embodiments, a network metric used to train an AI/ML model may be a parametrized loss function and an NWDAF AnLF instance may expose the parameters of the parametrized loss function thereby allowing an external entity (e.g., the AF) to tune (e.g., configure, modify or update) the parameters of the parameterized loss function during training of the AI/ML model with the goal of optimizing the AF's application metric. Other examples of configurable training parameters associated with an AI/ML model include the filters offset of a deformable convolutional layer (i.e., the drift to apply to each filter's element while performing the convolution of the inputs) of the AI/ML model or a learning rate applied by the optimizer during the training of the AI/ML model, as mentioned above.

At S304, the NEF utilizes Nnef_AnalyticsExposure_response message to forward (i.e., send) a list of NWDAF AnLF instances and a list of available AI/ML models to the AF along with the configurable training parameters associated with each available AI/ML model included in the list of available AI/ML models. In other words, at S304, the NEF sends a Nnef_AnalyticsExposure_response message that comprises a list of available AI/ML models to the AF along with the configurable training parameters associated with each available AI/ML model included in the list of available AI/ML models to the AF.

At step S305, the AF selects the preferred NWDAF AnLF and AI/ML model (Model 1 in the present example) from the list of available AI/ML models indicated in the Nnef_AnalyticsExposure_response message. The AF indicates the selected AI/ML model in the NWDAF's second new service input parameter referred to as ModelSelected of the Nnef_AnalyticsExposure_selection service operation in a Nnef_AnalyticsExposure_Subscribe message, and the AF sets the NWDAF's first new service input parameter referred to as DriveTraining to "True" in the Nnef_AnalyticsExposure_Subscribe message. According to at least some example embodiments, the AF optionally configures the configurable training parameters associated with the AI/ML model by setting the values of the configurable training parameters associated with the AI/ML model to desirable initial values in the Nnef_AnalyticsExposure_Subscribe message. The AF sends the Nnef_AnalyticsExposure_Subscribe message to the NEF.

At S306, based on the in the Nnef_AnalyticsExposure_Subscribe message received from the AF, the NEF subscribes to the analytics service of the NWDAF by invoking the Nnwdaf_AnalyticsSubscription_Subscribe service operation and specifying the AI/ML model selected and setting the NWDAF's first new service input parameter referred to as DriveTraining to "True" in the NWDAF's service input parameters in the Nnwdaf_AnalyticsSubscription_Subscribe request. The request includes among others the Analytics ID required and, through the NWDAF's first new input service input parameter referred to as DriveTraining, that the AF wants to drive the training phase of the AI/ML model (i.e., control the training of the AI/ML model), tuning the configurable training parameters associated with the AI/ML model to optimize AF's application metric. If the AF transmits initial values for the configurable training parameters associated with the AI/ML model, the NEF forwards the initial values to the NWDAF AnLF. Otherwise, the configurable training parameters associated with AI/ML model are initialized to default values.

At S307, in response to the Nnwdaf_AnalyticsSubscription_Subscribe request, the NWDAF AnLF sends an Nnwdaf_MLModelInfo_Request to the NWDAF MTLF the to train the AI/ML model specified in the Nnwdaf_AnalyticsSubscription_Subscribe request received from the NEF. In the Nnwdaf_MLModelInfo_Request, the NWDAF AnLF includes an identifier of the AI/ML model, sets the NWDAF's first new service input parameter referred to as DriveTraining to "True" and forwards the configurable training parameters associated with the AI/ML model specified in the request.

At S308, in response to the Nnwdaf_MLModelInfo_Request, the NWDAF MTLF collects the data and KPIs required to produce the analytics. For example, the NWDAF MTLF collects data from a NF of the 5GC (5GC NF), such as an AMF, PCF, SMF, etc. or the OAM system. Data that can be collected by the NWDAF MTLF are specified in TS 23.288. For example, the NWDAF MTLF may collect data indicative of a load of a NF.

Now, reference is made to Fig. 3B, continuing the signaling illustrated in Fig. 3A.

At S309, the NWDAF MTLF starts the training of the AI/ML model.

At S310, at each training epoch, the NWDAF MTLF forwards to the NWDAF AnLF the actual status information of the AI/ML model and the temporary analytics produced or generated by the AI/ML model selected at S305. Status information may be the accuracy or score or a confusion matrix of the AI/ML model over the validation dataset. In this way the Analytics Service Consumer may understand how the AI/ML model is performing when producing analytics.

At S311, at each training epoch, the NWDAF AnLF forwards to the NEF the received actual status information of the AI/ML model and the temporary analytics.

At S312, at each training epoch, the NEF forwards the actual status information of the AI/ML model and the temporary analytics to the AF.

At S313, at each training epoch, the AF assesses its application metric and determines new or updated values for the configurable training parameters associated with the AI/ML model. In this way, the AF enforces that the training of the AI/ML model optimizes the application metric (instead of the network metric) without disclosing sensitive information of the AF to NEF or NWDAF.

At S314, at each training epoch, the AF sends the new or updated values for the configurable training parameters of the AI/ML model to the NEF.

At S315, at each training epoch, the NEF forwards the new or updated values for the configurable training parameters associated with the AI/ML model to the NWDAF AnLF.

At S316, at each training epoch, the NWDAF AnLF forwards the new or updated configurable training parameters to the NWDAF MTLF that continues the training of the AI/ML model employing the new or updated configurable training parameters associated with the AI/ML model.

At S317, at the end of the training, i.e., after the completion of a defined number of training epochs, the NWDAF MTLF informs the NWDAF AnLF that the AI/ML model has been trained, for example by notifying the NWDAF AnLF, utilizing a Nnwdaf_MLModelInfo_Request_response message.

At S318, in response to the Nnwdaf_MLModelInfo_Request_response message, the NWDAF AnLF produces the required analytics utilizing the trained AI/ML model employing the configurable training parameters associated with the AI/ML model configured by the Analytics Service Consumer (e.g., AF).

At S319, the NWDAF AnLF notifies the analytics produced or generated at S318 to the NEF, utilizing a Nnwdaf_AnalyticsSubscription_Notify message.

At S320, in response to the Nnwdaf_AnalyticsSubscription_Notify message, the NEF forwards the analytics received at S319 to the AF, utilizing a Nnef_AnalyticsExposure_Notify message.

This example implementation impacts NWDAF (AnLF and MTLF) analytics subscription procedure described in clause 6.1.1 of [A], [F] and [G] to enhance NEF and NWDAF profiles and services and NWDAF discovery procedure. Furthermore, this example implementation impacts [D] as potential solution to KI #3 and 4, and [E] as potential solution to KI #1.

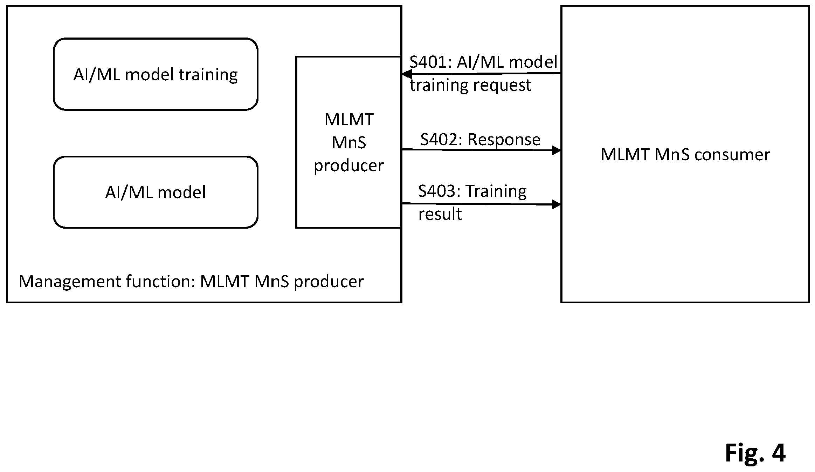

Now reference is made to Fig. 4, illustrating AI/ML model training requested by MLMT MnS consumer, according to [H].

Fig. 4 shows the MLMT MnS consumer sending, at S401, a request for training of an AI/ML model for a specific analytics service to the MLMT MnS producer of a management function of an OAM system.

At S402, the MLMT MnS producer sends a response to the request to the MLMT MnS consumer.

At S403, the MLMT MnS producer sends a result of the training of the AI/ML model to the MLMT MnS consumer. For example, the result of the training may be the accuracy of the trained AI/ML model at the end of the training of the AI/ML model or during the training of the AI/ML model, a duration of the training of the AI/ML model and an amount of training data utilized to train the AI/ML model.

Now reference is made to Fig. 5 which shows a signaling diagram illustrating signaling according to the second example embodiment of the subject matter described herein.

In Fig. 5, the MLMT MnS producer is an Analytics Service Producer, and the MLMT MnS consumer is an Analytics Service Consumer.

At S500, the MLMT MnS consumer knows the list of AI/ML models available at the MLMT MnS producer, along with the configurable training parameters associated with each available AI/ML model.

At S501, the MLMT MnS consumer requests AI/ML model training selecting the AI/ML model (Model 1 in the present case) and indicating the selected AI/ML model in the service input parameter ModelSelect in an AI/ML model training request and setting the service input parameter DriveTraining to "True" in the AI/ML model training request. Furthermore, according to at least some example embodiments, the MLMT MnS consumer provides initial values for the service input parameter configurable training parameters associated with the AI/ML model in the AI/ML model training request. Otherwise, the configurable training parameters associated with the AI/ML model are initialized to default values.

At S502, the MLMT MnS producer responds to the AI/ML model training request.

At S503, the MLMT MnS producer collects training data (e.g., input-target output examples). For example, training data can be collected from NFs of the 5GC, the OAM system, the RAN or UEs.

At S504, the MLMT MnS producer starts the training of the AI/ML model.

At S505, during each training epoch, the MLMT MnS producer forwards to the MLMT MnS consumer actual status information of the AI/ML model and temporary analytics produced by the AI/ML model selected at S501. Status information may be the accuracy or score or a confusion matrix of the AI/ML model over the validation dataset. In this way the Analytics Service Consumer may understand how the AI/ML model is performing when producing analytics.

At S506, during each training epoch, the MLMT MnS consumer assesses its application metric and determines new values for the configurable training parameters associated with the AI/ML model. In this way, the MLMT MnS consumer ensures that the application metric (instead of the network metric) is optimized during training of the AI/ML model without disclosing sensitive information to the MLMT MnS producer.

At S507, during each training epoch, the MLMT MnS consumer sends the updated configurable training parameters associated with the AI/ML model to the MLMT MnS producer.

At S508, at the end of the training, i.e., after the completion of a defined number of training epochs, the MLMT MnS producer informs the MLMT MnS consumer that the AI/ML model has been trained and provides the training result, for example by notifying the MLMT MnS Consumer, utilizing a Training result message. For example, the result of the training is the accuracy of the AI/ML model obtained at the end of the training, an accuracy of the AI/ML model during the training, a duration of the training of the Ai/ML model, and an amount of training data to train the AI/ML model.

This example implementation impacts [H] and [I] by providing new information (i.e., configurable training parameters associated with an AI/ML model) that is exchanged between MLMT MnS producer and MLMT MnS consumer when an MLMT MnS consumer requests AI/ML model training of the AI/ML model.

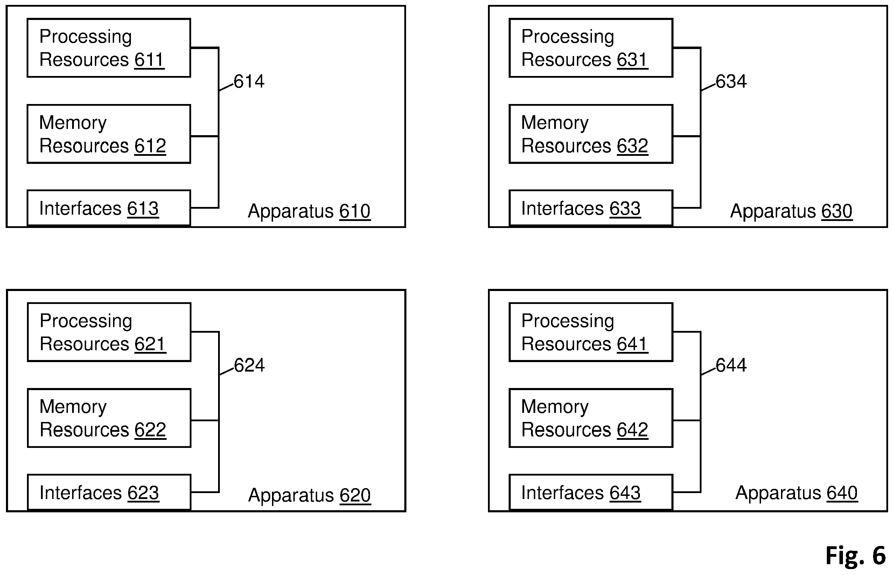

Now reference is made to Fig. 6 illustrating a simplified block diagram of apparatuses 610, 620, 630, 640 that are suitable for use in practicing at least some example embodiments of the subject matter described herein. According to an implementation example, process 1 of Fig. 1 is implemented by the apparatus 610, process 2 of Fig. 1 is implemented by the apparatus 620, process 3 of Fig. 2 is implemented by the apparatus 630, and process 4 of Fig. 2 is implemented by the apparatus 640.

The apparatuses 610, 620, 630, 640 each comprise processing resources (e.g. processing circuitry) 611, 621, 631, 641, memory resources (e.g. memory circuitry) 612, 622, 632, 642 and interfaces (e.g. interface circuitry) 613, 623, 633, 643, which are coupled via a wired or wireless connection 614, 624, 634, 644.

According to an example implementation, the memory resources 612, 622, 632, 642 are of any type suitable to the local technical environment and are implemented using any suitable data storage technology, such as semiconductor based memory devices, magnetic memory devices and systems, optical memory devices and systems, fixed memory and removable memory. The processing resources 611, 621, 631, 641 are of any type suitable to the local technical environment, and include one or more of general purpose computers, special purpose computers, microprocessors, digital signal processors (DSPs) and processors based on a multi core processor architecture, as non-limiting examples.

According to an implementation example, the memory resources 612, 622, 632, 642 comprise one or more non-transitory computer-readable storage media which store one or more programs that when executed by the processing resources 611, 621, 631, 641 cause the apparatus 610 to function as an Analytics Service Producer (e.g. a NWDAF or a MLMT MnS Producer), the apparatus 620 to function as an Analytics Service Consumer (e.g. AF/MLMT MnS Consumer), the apparatus 630 to function as an NRF, and the apparatus 640 to function as an NEF, as described above.

Further, as used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

The term "non-transitory", as used herein, is a limitation of the medium itself (i.e., tangible, not a signal) as opposed to a limitation on data storage persistency (e.g., RAM vs. ROM).

It is noted that, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

According to at least some example embodiments of the subject matter described herein, an apparatus (e.g., the apparatus 610 shown in Fig. 6) for use by an analytics service producer of a communication network is provided. The apparatus comprises means for receiving a training request issued by an analytics service consumer of the communication network, the training request comprising an indication of a selected model of a plurality of models, each model of the plurality of models configured to produce analytics for an analytics service, and means for causing training of the selected model based at least on values of configurable training parameters associated with the selected model to optimize an application metric of the analytics service consumer.

According to at least some example embodiments of the subject matter described herein, the training request further comprises initial values for one or more of the configurable training parameters associated with the selected model and the apparatus further comprises means for causing setting the values of the one or more configurable training parameters to the initial values.

According to at least some example embodiments of the subject matter described herein, the apparatus further comprises means for causing setting of default values for one or more of the configurable training parameters associated with the selected model.

According to at least some example embodiments of the subject matter described herein, the apparatus further comprises means for providing the analytics service consumer with information about the plurality of models and respective configurable training parameters associated with the plurality of models.

According to at least some example embodiments of the subject matter described herein, the apparatus further comprises means for, during training of the selected model, sending status information for the selected model and temporary analytics produced by the selected model towards the analytics service consumer.

According to at least some example embodiments of the subject matter described herein, the apparatus further comprises means for receiving updated values for the configurable training parameters from the analytics service consumer, wherein the updated values have been set to optimize the application metric of the analytics service consumer, and means for causing continuation of the training of the selected model based on the updated values for the configurable training parameters.

According to at least some example embodiments of the subject matter described herein, the analytics service producer comprises the plurality of models.

According to at least some example embodiments of the subject matter described herein, the apparatus further comprises means for training the selected model.

According to at least some example embodiments of the subject matter described herein, the apparatus further comprises means for providing access to the analytics service of a network entity of the communication network, which comprises the plurality of models.

According to at least some example embodiments of the subject matter described herein, the apparatus further comprises means for providing access to the analytics service of a network entity of the communication network, which trains the selected model.

According to at least some example embodiments of the subject matter described herein, the apparatus further comprises means for providing access to the analytics service of a network entity of the communication network, which comprises the plurality of models and trains the selected model.

According to at least some example embodiments of the subject matter described herein, an apparatus (e.g., the apparatus 620 shown in Fig. 6) for use by an analytics service consumer of a communication network is provided. The apparatus comprises means for selecting a model from a plurality of models for an analytics service, each model of the plurality of models configured to produce analytics for the analytics service, and means for sending a training request comprising an indication of the model, for training the model based at least on values of configurable training parameters associated with the model, towards an analytics service producer to train the model to optimize an application metric of the analytics service consumer.

According to at least some example embodiments of the subject matter described herein, the apparatus further comprises means for setting values for one or more of the configurable training parameters, and means for including the values in the training request.

According to at least some example embodiments of the subject matter described herein, the apparatus further comprises means for selecting the model from the plurality of models based on information provided by the analytics service producer.

According to at least some example embodiments of the subject matter described herein, the apparatus further comprises means for selecting the model and the one or more of the configurable training parameters from the plurality of models and configurable training parameters associated with the respective models based on information provided by the analytics service producer.

According to at least some example embodiments of the subject matter described herein, the apparatus further comprises means for selecting the model from the plurality of models based on information which is provided by a network exposure entity of the communication network based on a profile of the analytics service producer stored in a storage entity of the communication network.

According to at least some example embodiments of the subject matter described herein, the apparatus further comprises means for selecting the model and the one or more of the configurable training parameters from the plurality of models and configurable training parameters associated with the respective models based on information which is provided by a network exposure entity of the communication network based on a profile of the analytics service producer stored in a storage entity of the communication network.

According to at least some example embodiments of the subject matter described herein, the apparatus further comprises means for receiving status information of the model being trained and temporary analytics produced by the model being trained, means for assessing the application metric and determining new values for the configurable training parameters based on the assessing for optimizing the application metric of the analytics service consumer, and means for updating the values of the configurable training parameters to the new values and sending the updated values towards the analytics service producer.

According to at least some example embodiments of the subject matter described herein, an apparatus (e.g., the apparatus 630 shown in Fig. 6) for use by a storage entity of a communication network is provided. The apparatus comprises means for storing profiles of analytics service producers of network entities of the communication network, the profiles comprising a plurality of models configured to produce analytics for analytics services, and configurable training parameters associated with the plurality of models to be set by analytics service consumers to optimize application metrics of the analytics service consumers, and means for providing the profiles to a network exposure entity of the communication network.

According to at least some example embodiments of the subject matter described herein, an apparatus (e.g., the apparatus 640 shown in Fig. 6) for use by a network exposure entity of a communication network is provided. The apparatus comprises means for retrieving, based on requested one or more analytics services, profiles of analytics service producers of the communication network, the profiles comprising a plurality of models configured to produce analytics for the requested analytics services, and configurable training parameters associated with the plurality of models to be set by an analytics service consumer to optimize an application metric of the analytics service consumer, and means for sending the profiles to the analytics service consumer.

According to at least some example embodiments of the subject matter described herein, the analytics service producer comprises at least one of the following: a network data analytics function, an analytics logical function, a model training logical function, a machine learning model training management services producer, a non-real-time radio access network intelligent controller, or a near-real-time radio access network intelligent controller.

According to at least some example embodiments of the subject matter described herein, the analytics service consumer comprises at least one of the following: an application function, a machine learning model training management services consumer, an rApp, or an xApp.

According to at least some example embodiments of the subject matter described herein, the storage entity comprises a network repository function.

According to at least some example embodiments of the subject matter described herein, the network exposure entity comprises a network exposure function.

According to at least some example embodiments of the subject matter described herein, the plurality of models comprises artificial intelligence/machine learning models.

According to at least some example embodiments of the subject matter described herein, the configurable training parameters comprise at least one of the following: network metric training parameters, filters offset of a deformable convolutional layer of a network, or a learning rate applied during the training.

According to at least some example embodiments of the subject matter described herein, the training is performed over a training period corresponding to a defined number of epochs.

According to at least some example embodiments of the subject matter described herein, the analytics comprises prediction.

According to at least some example embodiments of the subject matter described herein, the communication network is a mobile communication network.

According to at least some example embodiments of the subject matter described herein, the network entity comprises a cloud server.

According to at least some example embodiments of the subject matter described herein, the communication network comprises at least one of the following: a 5G core, or an open radio access network.

It is to be understood that the above description is illustrative and is not to be construed as limiting. Various modifications and applications may occur to those skilled in the art without departing from the true spirit and scope as defined by the appended claims.

## Claims

1. A method for use by an analytics service producer of a communication network, the method comprising:
receiving a training request issued by an analytics service consumer of the communication network, the training request comprising an indication of a selected model of a plurality of models, each model of the plurality of models configured to produce analytics for an analytics service; and
causing training of the selected model based at least on values of configurable training parameters associated with the selected model to optimize an application metric of the analytics service consumer.

2. The method of claim 1, wherein the training request further comprises initial values for one or more of the configurable training parameters associated with the selected model and the method comprises causing setting the values of the one or more configurable training parameters to the initial values.

3. The method of claim 1 or 2, further comprising:
causing setting of default values for one or more of the configurable training parameters associated with the selected model.

4. The method of any one of claims 1 to 3, further comprising:
providing the analytics service consumer with information about the plurality of models and respective configurable training parameters associated with the plurality of models.

5. The method of any one of claims 1 to 4, further comprising:
during training of the selected model, sending status information for the selected model and temporary analytics produced by the selected model towards the analytics service consumer.

6. The method of claim 5, further comprising:
receiving updated values for the configurable training parameters from the analytics service consumer, wherein the updated values have been set to optimize the application metric of the analytics service consumer; and
causing continuation of the training of the selected model based on the updated values for the configurable training parameters.

7. The method of any one of claims 1 to 6, wherein at least one of the following applies:
the analytics service producer comprises the plurality of models;
the analytics service producer trains the selected model;
the analytics service producer provides access to the analytics service of a network entity of the communication network, which comprises the plurality of models;
the analytics service producer provides access to the analytics service of a network entity of the communication network, which trains the selected model; or
the analytics service producer provides access to the analytics service of a network entity of the communication network, which comprises the plurality of models and trains the selected model.

8. A method for use by an analytics service consumer of a communication network, the method comprising:
selecting a model from a plurality of models for an analytics service, each model of the plurality of models configured to produce analytics for the analytics service; and
sending a training request comprising an indication of the model, for training the model based at least on values of configurable training parameters associated with the model, towards an analytics service producer to train the model to optimize an application metric of the analytics service consumer.

9. The method of claim 8, further comprising:
setting values for one or more of the configurable training parameters; and
including the values in the training request.

10. The method of claim 8 or 9, further comprising at least one of the following:
selecting the model from the plurality of models based on information provided by the analytics service producer;
selecting the model and the one or more of the configurable training parameters from the plurality of models and configurable training parameters associated with the respective models based on information provided by the analytics service producer;
selecting the model from the plurality of models based on information which is provided by a network exposure entity of the communication network based on a profile of the analytics service producer stored in a storage entity of the communication network; or
selecting the model and the one or more of the configurable training parameters from the plurality of models and configurable training parameters associated with the respective models based on information which is provided by a network exposure entity of the communication network based on a profile of the analytics service producer stored in a storage entity of the communication network.

11. The method of any one of claims 8 to 10, further comprising:
receiving status information of the model being trained and temporary analytics produced by the model being trained;
assessing the application metric and determining new values for the configurable training parameters based on the assessing for optimizing the application metric of the analytics service consumer; and
updating the values of the configurable training parameters to the new values and sending the updated values towards the analytics service producer.

12. A method for use by a storage entity of a communication network, the method comprising:
storing profiles of analytics service producers of network entities of the communication network, the profiles comprising a plurality of models configured to produce analytics for analytics services, and configurable training parameters associated with the plurality of models to be set by analytics service consumers to optimize application metrics of the analytics service consumers; and
providing the profiles to a network exposure entity of the communication network.

13. A method for use by a network exposure entity of a communication network, the method comprising:
retrieving, based on requested one or more analytics services, profiles of analytics service producers of the communication network, the profiles comprising a plurality of models configured to produce analytics for the requested analytics services, and configurable training parameters associated with the plurality of models to be set by an analytics service consumer to optimize an application metric of the analytics service consumer; and
sending the profiles to the analytics service consumer.

14. The method of any one of claims 1 to 13, wherein at least one of the following applies:
the analytics service producer comprises at least one of the following: a network data analytics function, an analytics logical function, a model training logical function, a machine learning model training management services producer, a non-real-time radio access network intelligent controller, or a near-real-time radio access network intelligent controller;
the analytics service consumer comprises at least one of the following: an application function, a machine learning model training management services consumer, an rApp, or an xApp;
the storage entity comprises a network repository function;
the network exposure entity comprises a network exposure function;
the plurality of models comprises artificial intelligence/machine learning models;
the configurable training parameters comprise at least one of the following: network metric training parameters, filters offset of a deformable convolutional layer of a network, or a learning rate applied during the training;
the training is performed over a training period corresponding to a defined number of epochs;
the analytics comprises prediction;
the communication network is a mobile communication network;
the network entity comprises a cloud server; or
the communication network comprises at least one of the following: a 5G core, or an open radio access network.

15. An apparatus comprising means for:
receiving a training request issued by an analytics service consumer of a communication network, the training request comprising an indication of a selected model of a plurality of models, each model of the plurality of models configured to produce analytics for an analytics service; and
causing training of the selected model based at least on values of configurable training parameters associated with the selected model to optimize an application metric of the analytics service consumer.

16. An apparatus comprising means for:
selecting a model from a plurality of models for an analytics service, each model of the plurality of models configured to produce analytics for the analytics service; and
sending a training request comprising an indication of the model, for training the model based at least on values of configurable training parameters associated with the model, towards an analytics service producer to train the model to optimize an application metric of the apparatus.

17. An apparatus comprising means for:
storing profiles of analytics service producers of network entities of a communication network, the profiles comprising a plurality of models configured to produce analytics for analytics services, and configurable training parameters associated with the plurality of models to be set by analytics service consumers to optimize application metrics of the analytics service consumers; and
providing the profiles to a network exposure entity of the communication network.

18. An apparatus comprising means for:
retrieving, based on requested one or more analytics services, profiles of analytics service producers of a communication network, the profiles comprising a plurality of models configured to produce analytics for the requested analytics services, and configurable training parameters associated with the plurality of models to be set by an analytics service consumer to optimize an application metric of the analytics service consumer; and
sending the profiles to the analytics service consumer.
